(19) Europäisches Patentamt
European Patent Office
Office européen des brevets

(11) **EP 4 455 366 A1**

(12) **EUROPEAN PATENT APPLICATION**
published in accordance with Art. 153(4) EPC

(43) Date of publication:
**30.10.2024 Bulletin 2024/44**

(21) Application number: **22910761.0**

(22) Date of filing: **28.11.2022**

(51) International Patent Classification (IPC):
**C25B 1/02** (2006.01)   **C25B 9/00** (2021.01)
**C25B 9/05** (2021.01)   **C25B 9/23** (2021.01)
**C25B 9/67** (2021.01)

(52) Cooperative Patent Classification (CPC):
**C25B 1/02; C25B 9/00; C25B 9/05; C25B 9/23;
C25B 9/67;** Y02E 60/50

(86) International application number:
**PCT/JP2022/043660**

(87) International publication number:
**WO 2023/120043 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2021 JP 2021208953**

(71) Applicant: **Panasonic Intellectual Property
Management Co., Ltd.**
**Osaka-shi, Osaka 540-6207 (JP)**

(72) Inventors:
• **NAKAUE, Takayuki**
  **Kadoma-shi, Osaka 571-0057 (JP)**
• **KITA, Hiromi**
  **Kadoma-shi, Osaka 571-0057 (JP)**
• **SAKAI, Osamu**
  **Kadoma-shi, Osaka 571-0057 (JP)**
• **KANI, Yukimune**
  **Kadoma-shi, Osaka 571-0057 (JP)**

(74) Representative: **Grünecker Patent- und
Rechtsanwälte
PartG mbB
Leopoldstraße 4
80802 München (DE)**

(54) **COMPRESSION DEVICE**

(57)     A compressor includes a stack in which multiple electrochemical cells each including an anode, a cathode, and an electrolyte membrane sandwiched therebetween are stacked, an end plate located at an end in a stacking direction of the stack, and a voltage applicator that applies a voltage between the anode and the cathode, wherein, the compressor causes, by using the voltage applicator to apply the voltage , hydrogen in a hydrogen-containing gas fed to the anode to move to the cathode and produces compressed hydrogen, the end plate has a first channel through which a heating medium flows, the stack has a second channel extending through the stack and connected to the first channel, the first channel has a smaller cross-sectional area than the second channel, the first channel includes an annular channel and a transverse passage extending across the annular channel, and a heating medium external channel that is disposed outside the stack and through which the heating medium flows is connected to the transverse passage.

FIG. 2A

EP 4 455 366 A1

## Description

Technical Field

The present invention relates to a compressor.

Background Art

In recent years, hydrogen has attracted attention as a clean alternative energy source to fossil fuel from an environmental viewpoint, such as global warming, and an energy viewpoint, such as depletion of petroleum resources. Hydrogen is a promising clean energy because hydrogen basically releases only water when combusted and does not release carbon dioxide, which is a cause of global warming, and releases little nitrogen oxide or the like. Furthermore, fuel cells, which are devices that efficiently use hydrogen as a fuel, have been developed and put into widespread use for automotive power sources and private power generation for household use.

For example, hydrogen used as a fuel for fuel cell vehicles is commonly stored in an in-vehicle hydrogen tank with being highly compressed to several tens of MPa. The high-pressure hydrogen is commonly produced by compression of low-pressure (normal-pressure) hydrogen with a mechanical compressor.

Incidentally, in the forthcoming hydrogen society, there is a demand for the development of the technology for storing hydrogen at high densities to transport or use the hydrogen at a small volume and a low cost, as well as the technology for producing hydrogen. In particular, a hydrogen supply infrastructure needs to be upgraded to facilitate the widespread use of fuel cells, and various proposals have been made to produce, purify, and store high-purity hydrogen at high densities in order to ensure a stable supply of hydrogen.

For example, PTL 1 proposes an electrochemical hydrogen pump that purifies and pressurizes hydrogen included in a hydrogen-containing gas by application of a predetermined voltage between an anode and a cathode that have an electrolyte membrane therebetween. A multilayer structure including a cathode, an electrolyte membrane, and an anode is referred to as a membrane electrode assembly (hereafter referred to as MEA).

Citation List

Patent Literature

PTL 1: Japanese Patent No. 6956392

Summary of Invention

Technical Problem

An object of the present disclosure is to provide a compressor that allows less unbalanced distribution of the heating medium flowing in the compressor than a conventional compressor, for example.

Solution to Problem

To solve the above-described problem, a compressor according to an aspect of the present disclosure includes a stack in which multiple electrochemical cells each including an anode, a cathode, and an electrolyte membrane sandwiched therebetween are stacked; an end plate located at an end in a stacking direction of the stack; and a voltage applicator that applies a voltage between the anode and the cathode, wherein, the compressor causes, by using the voltage applicator to apply the voltage , hydrogen in a hydrogen-containing gas fed to the anode to move to the cathode and produces compressed hydrogen, the end plate has a first channel through which a heating medium flows, the stack has a second channel extending through the stack and connected to the first channel, the first channel has a smaller cross-sectional area than the second channel, the first channel includes an annular channel and a transverse passage extending across the annular channel, and a heating medium external channel that is disposed outside the stack and through which the heating medium flows is connected to the transverse passage.

Advantageous Effects of Invention

The compressor according to an aspect of the present disclosure has the effect of allowing less unbalanced distribution of the heating medium flowing in the compressor than a conventional compressor.

Brief Description of Drawings

[Fig. 1A] Fig. 1A illustrates an example of an electrochemical hydrogen pump according to an embodiment.
[Fig. 1B] Fig. 1B is a magnified view of a portion B in Fig. 1A.
[Fig. 2A] Fig. 2A is a perspective view illustrating an example of a heating medium channel of an electrochemical hydrogen pump of the embodiment.
[Fig. 2B] Fig. 2B is a plan view illustrating an example of a connection portion of the heating medium channel in Fig. 2A.
[Fig. 3A] Fig. 3A is a perspective view illustrating an example of the heating medium channel of the electrochemical hydrogen pump in Example of the embodiment.
[Fig. 3B] Fig. 3B is a plan view illustrating an example of a connection portion of the heating medium channel in Fig. 3A.

Description of Embodiments

In an electrochemical compressor including a stack in which electrochemical cells each including an anode, a cathode, and an electrolyte membrane sandwiched therebetween are stacked, a heating medium is fed to separators disposed between the electrochemical cells to regulate the temperature of the electrochemical cells.

The compressor has manifolds that are channels extending through the above-described stack and through which the heating medium to be fed to the separators or the heating medium to be discharged from the separator flows.

Furthermore, the above-described multilayer structure (stack) is sandwiched between two end plates with an insulating plate or the like therebetween, and the end plates are fastened with fasteners (e.g., bolts and nuts). This is a common multilayer fastening structure.

Here, in the compressor of PTL 1, the above-described multilayer structure has the heating medium channel not only in the above-described separator but also in the end plates. In this case, it is necessary to reduce unbalanced distribution of the heating medium between the heating medium channel in the end plate and the manifold, but PTL 1 does not sufficiently discuss this point.

In view of the foregoing, the inventors of the present disclosure conducted extensive studies and found a channel configuration that allows appropriate distribution of the heating medium in the end plate to reduce the unbalanced distribution of the heating medium between the heating medium channel in the end plate and the manifold, and thus conceived of an aspect of the disclosure described below.

In other words, the compressor according to a first aspect of the present disclosure includes a stack in which multiple electrochemical cells each including an anode, a cathode, and an electrolyte membrane sandwiched therebetween are stacked, an end plate located at an end in a stacking direction of the stack, and a voltage applicator that applies a voltage between the anode and the cathode, wherein, the compressor causes, by using the voltage applicator to apply the voltage , hydrogen in a hydrogen-containing gas fed to the anode to move to the cathode and produces compressed hydrogen, the end plate has a first channel through which a heating medium flows, the stack has a second channel extending through the stack and connected to the first channel, the first channel has a smaller cross-sectional area than the second channel, the first channel includes an annular channel and a transverse passage extending across the annular channel, and a heating medium external channel that is disposed outside the stack and through which the heating medium flows is connected to the transverse passage.

The compressor according to this aspect having such a configuration allows less unbalanced distribution of the heating medium flowing in the compressor than a conventional compressor. Specifically, the compressor according to this aspect allows less unbalanced distribution of the heating medium between the first channel in the end plate and the second channel in the stack than a conventional compressor.

Here, the heating medium needs to flow through the second channel in an amount enough to be distributed to each of the electrochemical cells in a predetermined amount. Thus, it is more advantageous for the second channel to have a larger cross-sectional area in order to reduce pressure drop during passage of the heating medium through the second channel.

In view of this, in the compressor according to this aspect, the heating medium external channel is connected to the transverse passage of the first channel, so that the heating medium can readily flow to the annular channel of the first channel through the transverse passage. Thus, the compressor according to this aspect allows appropriate flow of the heating medium with less unbalanced distribution of the heating medium between the first channel in the end plate and the second channel in the stack than a conventional compressor.

In the compressor according to a second aspect of this disclosure, which is based on the compressor according to the first aspect, the heating medium external channel may be connected to a portion of the transverse passage that is away from a connection portion between the transverse passage and the second channel.

If the heating medium external passage is connected to the connection portion between the transverse passage and the second channel, the heating medium will be more likely to flow into the second channel without passing through the first channel in the end plate.

In view of this, in the compressor according to this aspect, at a portion away from the connection portion between the transverse passage and the second channel, the transverse passage and the heating medium external channel are connected to each other. In this configuration, the heating medium can flow through the first channel in the end plate more easily than in a configuration in which the transverse passage and the heating medium external channel are connected to each other at the former connection portion.

In the compressor according to a third aspect of this disclosure, which is based on the compressor according to the second aspect, the heating medium external channel may be connected to a portion of the transverse passage that is closer to the connection portion between the transverse passage and the second channel than a midpoint of the transverse passage.

If the heating medium external channel is connected to a portion of the transverse passage that is farther from the connection portion between the transverse passage and the second channel than the midpoint of the transverse passage is, the pressure drop during passage of the heating medium through the first channel may increase.

In view of this, in the compressor according to this aspect, the connection portion between the transverse passage and the heating medium external channel is closer to the connection portion between the transverse passage and the second channel than the midpoint of the transverse passage is. This causes less pressure drop during passage of the heating medium through the first channel than a configuration in which the connection portion between the transverse passage and the heating medium external channel is farther from the connection portion.

In the compressor according to a fourth aspect of this disclosure, which is based on the compressor according to the second or third aspect, a portion of the transverse passage that is farther from the connection portion between the transverse passage and the second channel than a connection portion between the transverse passage and the heating medium external channel is may have a larger cross-sectional area than a portion of the transverse passage that is closer to the connection portion between the transverse passage and the second channel than the connection portion between the transverse passage and the heating medium external channel.

According to this configuration, in the compressor according to this aspect, a portion of the transverse passage that is farther from the connection portion between the transverse passage and the second channel than the connection portion between the transverse passage and the heating medium external channel has a larger cross-sectional area than a portion of the transverse passage that is closer to the connection portion between the transverse passage and the second channel than the connection portion between the transverse passage and the heating medium external channel. This configuration can allow easier passage of the heating medium through the first channel than a configuration in which the cross-sectional areas are reversed between them, as well as reduction in the increase in pressure drop during passage of the heating medium through the first channel.

Hereafter, embodiments of the present disclosure will be described with reference to the attached drawings. The embodiment described below illustrates an example of the above-described aspects. Thus, the shapes, the materials, the components, the positions of the components, and the connections between the components described below are merely examples and are not intended to limit the above-described aspects unless otherwise specified in the claims. Among the components described below, components that are not described in the independent claims, which include the broadest concepts of the aspects, will be described as optional components. The components that have the same reference numerals in the drawings will not be described in some cases. The components are schematically illustrated in the drawings for ease of understanding, and thus the shapes and the dimensional ratios are not always accurate.

EMBODIMENT

In the following embodiment, the configuration and operation of an electrochemical hydrogen pump, which is an example of the above-described compressor, are described.

[Device Configuration]

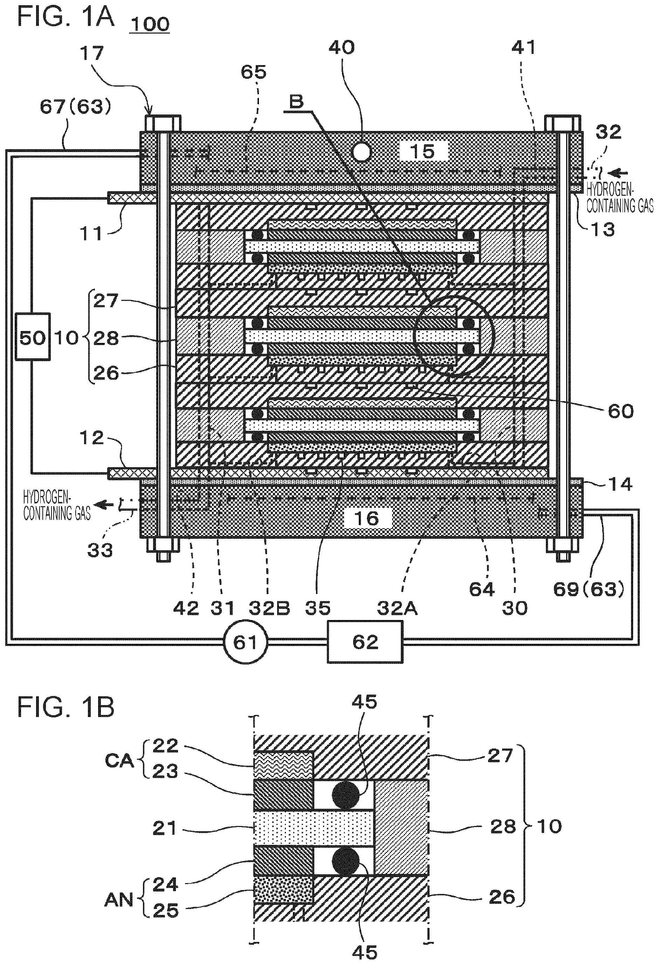

Fig. 1A illustrates an example of an electrochemical hydrogen pump according to this embodiment. Fig. 1B is a magnified view of the portion B in Fig. 1A.

In the example illustrated in Figs. 1A and 1B, an electrochemical hydrogen pump 100 includes a stack in which multiple electrochemical cells 10 each including an anode AN, a cathode CA, and an electrolyte membrane 21 sandwiched therebetween are stacked.

In Fig. 1A, three electrochemical cells 10 are stacked, but the number of electrochemical cells 10 is not limited to three. The number of electrochemical cells 10 may be set appropriately in accordance with the operating conditions, such as the amount of hydrogen to be compressed by the electrochemical hydrogen pump 100.

The electrochemical cell 10 includes an electrolyte membrane 21, an anode AN, a cathode CA, a cathode separator 27, an anode separator 26, and an insulator 28.

In the electrochemical cell 10, the electrolyte membrane 21, an anode catalyst layer 24, a cathode catalyst layer 23, an anode power feeder 25, a cathode power feeder 22, the anode separator 26, and the cathode separator 27 are stacked.

The anode AN is disposed on one of main surfaces of the electrolyte membrane 21. The anode AN is an electrode including the anode catalyst layer 24 and the anode power feeder 25. An O-ring 45 is disposed on the anode separator 26 to surround the anode catalyst layer 24 of the anode AN in plan view. This properly seals the anode AN with the O-ring 45.

The cathode CA is disposed on the other of the main surfaces of the electrolyte membrane 21. The cathode CA is an electrode including the cathode catalyst layer 23 and the cathode power feeder 22. An O-ring 45 is disposed on the cathode separator 27 to surround the cathode catalyst layer 23 of the cathode CA in plan view. This properly seals the cathode CA with the O-ring 45.

Thus, the electrolyte membrane 21 is sandwiched between the anode AN and the cathode CA with being in contact with both the anode catalyst layer 24 and the cathode catalyst layer 23.

The electrolyte membrane 21 is a proton-conducting polymer membrane. The electrolyte membrane 21 may have any configuration that can conduct protons.

Examples of the electrolyte membrane 21 include, but are not limited to, a fluorine-based polymer electrolyte membrane and a hydrocarbon polymer electrolyte membrane. Specific examples of the electrolyte membrane 21 include Nafion (registered trademark, available from DuPont) and Aciplex (registered trademark, available from Asahi Kasei Corp.).

The anode catalyst layer 24 is in contact with one of the main surfaces of the electrolyte membrane 21. Examples of a catalyst metal included in the anode catalyst layer 24 include, but are not limited to, platinum.

The cathode catalyst layer 23 is in contact with the other of the main surfaces of the electrolyte membrane 21. Examples of a catalyst metal included in the cathode catalyst layer 23 include, but are not limited to, platinum.

Examples of a catalyst carrier of the cathode catalyst layer 23 and the anode catalyst layer 24 include, but are not limited to, carbon particles, such as carbon black particles and graphite particles, and electrically conductive oxide particles.

In the cathode catalyst layer 23 and the anode catalyst layer 24, highly-dispersed microparticles of the catalyst metal are supported on the catalyst carrier. Furthermore, a proton-conducting ionomer component is commonly added to the cathode catalyst layer 23 and the anode catalyst layer 24 to enlarge the electrode reaction field.

The cathode power feeder 22 is disposed on the cathode catalyst layer 23. The cathode power feeder 22 is composed of a porous material and has electrical conductivity and gas diffusibility. Furthermore, the cathode power feeder 22 preferably has a certain degree of elasticity to properly change in position or shape in accordance with a change in position or shape of the components, which may occur during the operation of the electrochemical hydrogen pump 100 due to the pressure difference between the cathode CA and the anode AN. The electrochemical hydrogen pump 100 according to this embodiment has a component composed of carbon fibers as the cathode power feeder 22. For example, the component may be a porous carbon fiber sheet, such as a carbon paper sheet, a carbon cloth, or a carbon felt sheet. A carbon fiber sheet is not necessarily used as a base material of the cathode power feeder 22. Other examples of the base material of the cathode power feeder 22 include a sintered body of metal fibers produced using titanium, a titanium alloy, or stainless steel as a material, and a sintered body of metal particles produced using any of the above materials.

The anode power feeder 25 is disposed on the anode catalyst layer 24. The anode power feeder 25 is composed of a porous material and has electrical conductivity and gas diffusibility. Furthermore, the anode power feeder 25 preferably has a stiffness high enough to reduce changes in position and shape of the components, which may occur during the operation of the electrochemical hydrogen pump 100 due to the pressure difference between the cathode CA and the anode AN.

Specific examples of the base material of the anode power feeder 25 include a sintered fiber, a sintered powder, an expanded metal, a metal mesh, and a perforated metal produced using titanium, a titanium alloy, stainless steel, carbon, or the like as a material.

The anode separator 26 is a component disposed on the anode AN. The cathode separator 27 is a component disposed on the cathode CA. Specifically, the anode separator 26 has a recess at the middle, and the recess accommodates the anode power feeder 25. Furthermore, the cathode separator 27 has a recess at the middle, and the recess accommodates the cathode power feeder 22.

The anode separator 26 and the cathode separator 27 described above may be composed of a metal sheet formed of titanium, stainless steel, or the like. When the metal sheet is formed of stainless steel, metal sheet formed of, among various kinds of stainless steels, SUS316L and SUH660 have excellent properties such as high acid resistance and high hydrogen embrittlement resistance.

As illustrated in Fig. 1A, the main surface of the cathode separator 27 that is in contact with the cathode power feeder 22 is flat without a cathode gas channel. In such a case, the contact area between the cathode power feeder 22 and the cathode separator 27 is larger than that in a case in which the main surface of the cathode separator 27 has a cathode gas channel. This can reduce the contact resistance between the cathode power feeder 22 and the cathode separator 27 in the electrochemical hydrogen pump 100.

In contrast, the main surface of the anode separator 26 that is in contact with the anode power feeder 25 has a serpentine anode gas channel 35 that includes, for example, multiple U-shaped turned portions and multiple straight portions in plan view. The straight portions of the anode gas channel 35 extend in a direction perpendicular to the plane of the sheet of Fig. 1A. However, the above-described anode gas channel 35 is an example and should not be limited to this example. For example, the anode gas channel may consist of multiple straight channels.

Furthermore, in each of the electrochemical cells 10 of the electrochemical hydrogen pump 100, an insulator 28 having an annular and planar shape is interposed between the cathode separator 27 and the anode separator 26 to surround the electrolyte membrane 21. Examples of the base material of the insulator 28 include, but are not limited to, a fluorine rubber. With this configuration, short circuits between the cathode separator 27 and the anode separator 26 in the electrochemical cell 10 can be properly prevented.

Furthermore, the cathode separators 27 and the power feed plate 12 each have a heating medium branch channel 60. In this embodiment, the heating medium branch channel 60 in the form of a serpentine channel groove is in the main surface of each of the cathode separators 27 and the power feed plate 12 that is adjacent to the anode separator 26 but should not be limited to this. The heating medium branch channel 60 may be in the main surface of the anode separator 26. This enables the temperature of the electrochemical cell 10 to be properly controlled through adjustment of the temperature, flow rate, or the like of the heating medium flowing through the heating medium branch channel 60 during the operation of the electrochemical hydrogen pump 100. Examples of the heating medium that flows through the heating medium branch channel 60 include, but are not limited to, liquid water and antifreeze. However, liquid water is easier to handle as a heating medium.

Although not illustrated in the drawings, the cathode separator 27 and the anode separator 26 adjacent to each other may be a bipolar plate integrally including them. In such a case, the bipolar plate serves as both the anode separator 26 of one of adjacent electrochemical cells 10 and the cathode separator 27 of the other of adjacent electrochemical cells 10. This can reduce the number of components of the electrochemical hydrogen pump 100. For example, the number of separators can be reduced, and the sealing member between the separators can be eliminated. In addition, the integration between the anode separator 26 and the cathode separator 27 eliminates the gap at the joint therebetween, resulting in reduction in the contact resistance between them.

In this way, the cathode separator 27 and the anode separator 26 having the above-described MEA therebetween form the electrochemical cell 10.

As illustrated in Fig. 1A, the electrochemical hydrogen pump 100 includes two power feed plates 11 and 12 disposed at the ends of the stack of the electrochemical cells 10 in the stacking direction, two insulating plates 13 and 14 disposed on outer surfaces of the power feed plates 11 and 12, and two end plates 15 and 16 disposed on outer surfaces of the insulating plates 13 and 14.

The electrochemical hydrogen pump 100 also includes fasteners 17 that fasten the stack, the power feed plates 11 and 12, the insulating plates 13 and 14, and the end plates 15 and 16 together in the above stacking direction.

In the example illustrated in Fig. 1A, the end plate 15 is a cathode end plate disposed, with the power feed plate 11 and the insulating plate 13 therebetween, on one of the cathode separators 27 that is located at one end in the stacking direction, in which the components of the electrochemical cell 10 are stacked. The end plate 16 is an anode end plate disposed, with the power feed plate 12 and the insulating plate 14 therebetween, on one of the anode separators 26 that is located at the other end in the stacking direction, in which the components of the electrochemical cells 10 are stacked.

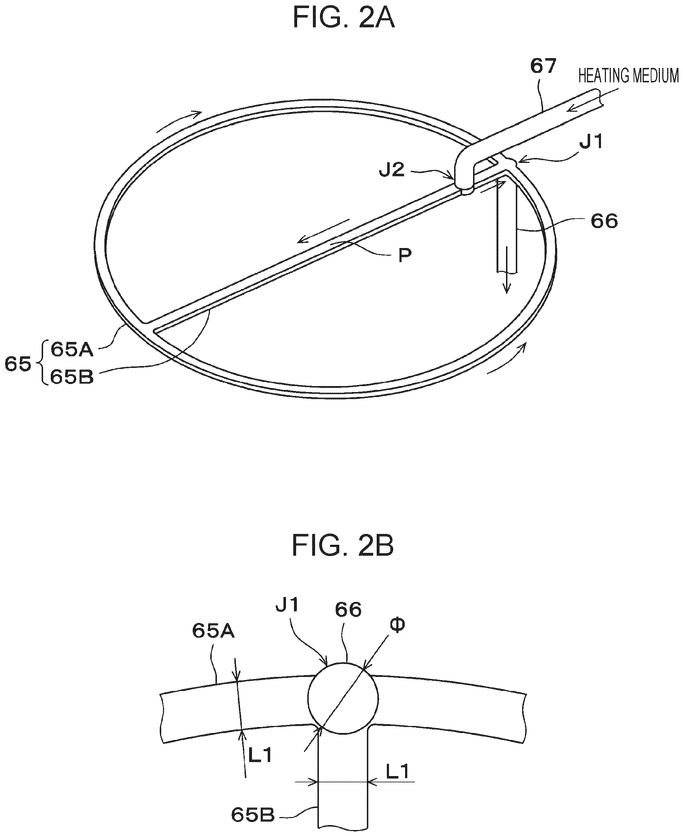

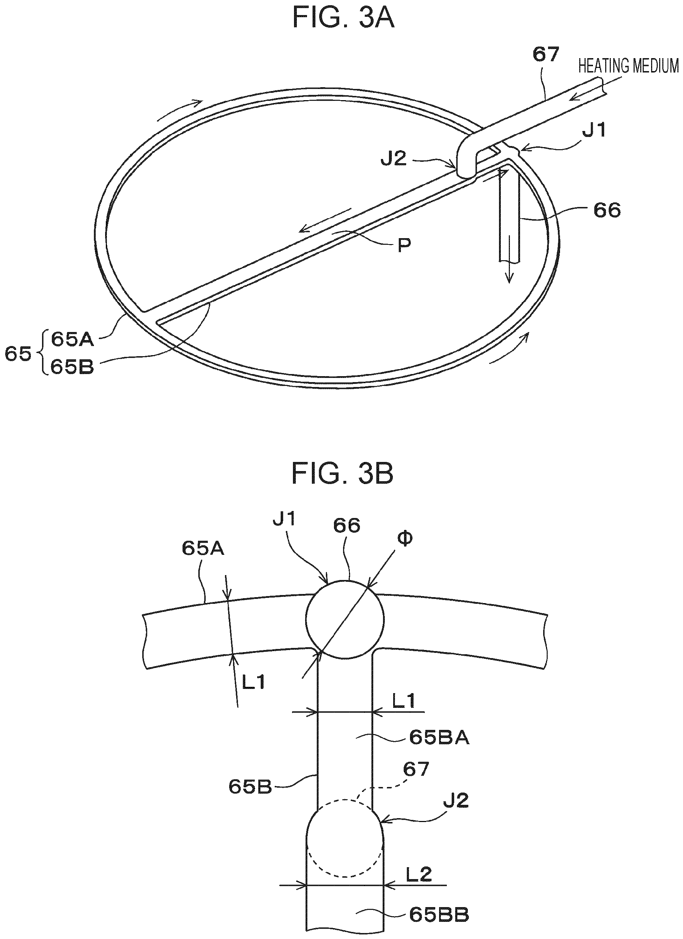

The end plate 15 has a cathode gas discharge channel 40 through which the high-pressure hydrogen compressed at the cathode CA flows, an anode gas feed channel 41 through which a hydrogen-containing gas fed from an external source to the anode AN flows, a heating medium feed passage 67 located outside the stack and through which a heating medium flows, and a heating medium channel 65 through which a heating medium flows. As illustrated in Figs. 2A and 3A, the heating medium feed passage 67 is a channel for feeding a heating medium from an external source to the heating medium channel 65 and a tubular heating medium inlet manifold 66. The details of such a channel configuration on the heating medium inlet side will be explained later.

Here, the heating medium feed passage 67 consists of a pipe connected to the heating medium inlet of the end plate 15 and a communication hole in the end plate 15, and the heating medium channel 65 consists of a channel groove in the main surface of the end plate 15 adjacent to the insulating plate 13, but the configurations of them should not be limited to this.

The heating medium feed passage 67 corresponds to an example of a "heating medium external channel" of the present disclosure. The heating medium channel 65 corresponds to an example of a "first channel" of the present disclosure. The heating medium inlet manifold 66 corresponds to an example of a "second channel" of the present disclosure.

The end plate 16 has an anode gas discharge channel 42 through which a hydrogen-containing gas to be discharged from the anode AN flows, a heating medium channel 64 through which a heating medium flows, a heating medium discharge passage 69 located outside the stack and through which the heating medium flows, and a cathode gas discharge channel (not illustrated) through which high-pressure hydrogen compressed at the cathode CA flows. Although not illustrated, the heating medium discharge passage 69 is a channel for discharging a heating medium to the outside through the heating medium channel 64 and a tubular heating medium outlet manifold (not illustrated).

Here, the heating medium discharge passage 69 consists of a pipe connected to the heating medium outlet of the end plate 16 and a communication hole in the end plate 16, and the heating medium channel 64 consists of a channel groove in the main surface of the end plate 16 adjacent to the insulating plate 14, but the configurations of them should not be limited to this.

The heating medium discharge passage 69 corresponds to an example of the "heating medium external channel" of the present disclosure. The heating medium channel 64 corresponds to an example of the "first channel" of the present disclosure. The heating medium outlet manifold corresponds to an example of the "second channel" of the present disclosure.

Examples of the heating medium that flows through the heating medium channels 64 and 65 include, but are not limited to, liquid water and antifreeze. However, liquid water is easier to handle as a heating medium.

The above-described configurations of the gas channels in the end plates 15 and 16 are examples and should not be limited to this example. For example, only one of the end plates 15 and 16 may have the cathode gas discharge channel through which the high-pressure hydrogen compressed at the cathode CA flows. Furthermore, for example, the end plate 15 may have the anode gas discharge channel through which the high-pressure hydrogen discharged from the anode AN flows, and the end plate 16 may have the anode gas feed channel through which hydrogen-containing gas to be fed to the anode AN from an external source flows. Alternatively, both the end plates 15 and 16 may have no anode gas discharge channel.

The fasteners 17 may have any configuration that can fasten the stack of the electrochemical cells 10, the power feed plates 11 and 12, the insulating plates 13 and 14, and the end plates 15 and 16 together in the above-described stacking direction. Examples of the fasteners 17 include a bolt and a nut with a belleville washer.

Thus, in the electrochemical hydrogen pump 100 according to this embodiment, multiple electrochemical cells 10 stacked on top of one another are properly held by the fastening pressure of the fasteners 17 in the above-described stacking direction. This allows the sealing members to properly exhibit the sealing properties between the components of the electrochemical cells 10 and reduces the contact resistance between the components.

In the electrochemical hydrogen pump 100 according to this embodiment, bolts of the fasteners 17 penetrate the power feed plates 11 and 12, the insulating plates 13 and 14, and the end plates 15 and 16, and thus the electrochemical cells 10 that are stacked on top of one another are properly held by the fastening pressure of the fasteners 17 in the above-described stacking direction.

An anode gas inlet pathway 32 is connected to the anode gas feed channel 41 in the end plate 15 illustrated in Fig. 1A. The anode gas inlet pathway 32 may, for example, consist of a pipe through which a hydrogen-containing gas to be fed to the anode AN flows.

The anode gas inlet pathway 32 is in communication with a tubular anode gas inlet manifold 30 with the anode gas feed channel 41 therebetween. The anode gas inlet manifold 30 consists of a series of through holes in the components of the electrochemical cells 10.

In the electrochemical hydrogen pump 100 of this embodiment, each of the electrochemical cells 10 has a first communication passage 32A, which allows communication between the anode gas inlet manifold 30 and the anode gas channel 35, in a main surface of the anode separator 26 of the electrochemical cell 10 that is away from the anode AN. For example, the first communication passage 32A may consist of a channel groove and a communication hole in the anode separator 26. The first communication passage 32A extends from one of the ends of the serpentine anode gas channel 35 to the anode gas inlet manifold 30.

In this way, the anode gas inlet manifold 30 is in communication with one of the ends of each of the anode gas channels 35 of the electrochemical cells 10 with the corresponding first communication passages 32A therebetween. In this configuration, a hydrogen-containing gas fed to the anode gas inlet manifold 30 through the anode gas inlet pathway 32 is distributed to each of the electrochemical cells 10 through the respective first communication passages 32A of the electrochemical cells 10. While the distributed hydrogen-containing gas passes through the anode gas channel 35, the hydrogen-containing gas is fed from the anode power feeder 25 to the anode catalyst layer 24.

An anode gas outlet pathway 33 is connected to the anode gas discharge channel 42 in the end plate 16 illustrated in Fig. 1A. The anode gas outlet pathway 33 may, for example, consist of a pipe through which a hydrogen-containing gas to be discharged from the anode AN flows.

The anode gas outlet pathway 33 is in communication with a tubular anode gas outlet manifold 31 with the anode gas discharge channel 42 therebetween. The anode gas outlet manifold 31 consists of a series of through holes in the components of the electrochemical cells 10.

In the electrochemical hydrogen pump 100 of this embodiment, each of the electrochemical cells 10 has a second communication passage 32B, which allows communication between the anode gas outlet manifold 31 and the anode gas channel 35, in a main surface of the anode separator 26 that is away from the anode AN of the electrochemical cell 10. For example, the second communication passage 32B may consist of a channel groove and a communication hole in the anode separator 26. The second communication passage 32B extends from the other one of the ends of the serpentine anode gas channel 35 to the anode gas outlet manifold 31.

In this way, the anode gas outlet manifold 31 is in communication with the other one of the ends of each of the anode gas channels 35 of the electrochemical cells 10 with the corresponding second communication passages 32B therebetween. Thus, the hydrogen-containing gas that has passed through the respective anode gas channels 35 of the electrochemical cells 10 is fed through the respective second communication passages 32B to the anode gas outlet manifold 31 where the flows of the hydrogen-containing gas join together to become a single flow. Then, the flow of hydrogen-containing gas is directed to the anode gas outlet pathway 33.

A cathode gas outlet pathway (not illustrated) is connected to the cathode gas discharge channel 40 in the end plate 15 illustrated in Fig. 1A. The cathode gas outlet pathway may, for example, consist of a pipe through which high-pressure hydrogen ($H_2$) discharged from the cathode CA flows.

The cathode gas outlet pathway is in communication with a tubular cathode gas outlet manifold (not illustrated) with the cathode gas discharge channel 40 therebetween. The cathode gas outlet manifold consists of a series of through holes in the components of the electrochemical cells 10.

In each of the electrochemical cells 10 included in the electrochemical hydrogen pump 100 of this embodiment, the cathode separator 27 has a communication pathway (not illustrated) that allows communication between the recess of the cathode separator 27 and the cathode gas outlet manifold.

In this configuration, during the operation of the electrochemical hydrogen pump 100, the high-pressure hydrogen compressed at the cathode CA passes, in this order, through the communication pathway, the cathode gas outlet manifold, and the cathode gas discharge channel 40 to be discharged to the cathode gas outlet pathway.

The end plates 15 and 16 described above may be composed of a metal sheet formed of titanium, stainless steel, or the like. When the metal sheet is formed of stainless steel, metal sheets formed of, among various kinds of stainless steels, SUS316L and SUH660 have excellent properties such as high acid resistance and high hydrogen embrittlement resistance.

As illustrated in Fig. 1A, the electrochemical hydrogen pump 100 includes a pump 61, a heater 62, and a heating medium circulation pathway 63.

The heating medium circulation pathway 63 is a channel in which the heating medium passes through the heating medium channel 65, the heating medium branch channel 60, and the heating medium channel 64 such that the heating medium circulates.

Specifically, in the example illustrated in Fig. 1A, the end plate 16 is configured such that an end of the heating medium circulation pathway 63 is connected to a heating medium outlet of the end plate 16. The end plate 15 is configured such that the other end of the heating medium circulation pathway 63 is connected to a heating medium inlet of the end plate 15. The heating medium circulation pathway 63 may, for example, consist of a pipe through which the heating medium flows. In short, in this example, the heating medium circulation pathway 63 includes the heating medium feed passage 67 and the heating medium discharge passage 69. A portion of the pipe constituting the heating medium circulation pathway 63 that is located upstream of the pump 61 corresponds to the heating medium discharge passage 69, and a portion of the pipe constituting the heating medium circulation pathway 63 that is located downstream corresponds to the heating medium feed passage 67.

The pump 61 is a device that is disposed on the heating medium circulation pathway 63 and circulates the heating medium flowing through the heating medium circulation pathway 63. The pump 61 may be of any type that can circulate the heating medium. Examples of the pump 61 include, but are not limited to, a positive displacement piston pump and a rotary pump.

The heater 62 is a device that heats the heating medium. The heater 62 may have any configuration that can heat the heating medium. Examples of the heater 62 include, but are not limited to, an electric heater disposed on the heating medium circulation pathway 63. Furthermore, the heating medium circulation pathway 63 may be provided with a temperature sensor (not illustrated), such as a thermocouple. This enables the heat applied to the heating medium by the heater 62 to be controlled, with reference to the temperature sensed by the temperature sensor, such that the heating medium circulating through the heating medium circulation pathway 63 has an intended temperature.

Here, in the example illustrated in Fig. 1A, the heating medium channel 65 in the end plate 15 and the heating medium branch channel 60 are in communication with each other through the heating medium inlet manifold 66 (see Figs. 2A and 3A). The heating medium inlet manifold 66 consists of a series of through holes in the components of the electrochemical cells 10. In other words, the stack has the heating medium inlet manifold 66 that penetrates the stack and that is connected to the heating medium channel 65.

Furthermore, in the cathode separators 27 and the power feed plate 12, groove-shaped communication passages (not illustrated) that branch from the heating medium inlet manifold 66 are in communication with respective one of ends of the serpentine heating medium branch channels 60 in the cathode separators 27 and the power feed plate 12 at the end.

Furthermore, the heating medium channel 64 in the end plate 16 is in communication with the heating medium branch channel 60 with the heating medium outlet manifold therebetween. The heating medium outlet manifold consists of a series of through holes in the components of the electrochemical cells 10. In other words, the stack has the heating medium outlet manifold that penetrates the stack and that is connected to the heating medium channel 64.

Furthermore, in each of the cathode separators 27 and the power feed plate 12, groove-shaped communication passages (not illustrated) that branch from the heating medium outlet manifold are in communication with the respective other one of ends of the serpentine heating medium branch channels 60 in the cathode separators 27 and the power feed plate 12 at the end.

Here, the heating medium sent from the heating medium circulation pathway 63 is directed to the heating medium channel 65 and the heating medium inlet manifold 66 through the heating medium feed passage 67. Furthermore, the heating medium flowing through the heating medium inlet manifold 66 is distributed to the heating medium branch channels 60 of the cathode separators 27 and the power feed plate 12. The flows of the heating medium are then joined in the heating medium outlet manifold. The joined flows of heating medium are directed to the heating medium channel 64 and the heating medium discharge passage 69 and then discharged to the heating medium circulation pathway 63.

In this way, when the pump 61 is activated, the heating medium heated by the heater 62 passes through the heating medium channel 65, the heating medium branch channel 60, and the heating medium channel 64, resulting in circulation of the heating medium through the heating medium circulation pathway 63.

The above-described channel configuration for the heating medium is an example and should not be limited to this example. For example, the end plate 15 may have the heating medium inlet, and the end plate 16 may have the heating medium outlet. Furthermore, for example, a pathway of the heating medium circulating through the heating medium channels 64 and 65 and a pathway of the heating medium circulating through the heating medium branch channel 60 may be separate systems. However, as described above, the channel configuration can be simplified when a single pathway is used as a pathway of the heating medium circulating through the heating medium channels 64 and 65 and heating medium branch channel 60.

As illustrated in Fig. 1A, the electrochemical hydrogen pump 100 includes an electric power applicator 50.

The electric power applicator 50 is a device that applies electric power between the anode AN and the cathode CA. Specifically, a high potential of the electric power applicator 50 is applied to the anode AN, and a low potential of the electric power applicator 50 is applied to the cathode CA. The electric power applicator 50 may have any configuration that can apply electric power between the anode AN and the cathode CA. For example, the electric power applicator 50 may be a device that controls the electric power applied between the anode AN and the cathode CA. In such a case, the electric power applicator 50 is equipped with a DC-to-DC converter when connected to a direct-current power source, such as a battery, a solar cell, or a fuel cell, and is equipped with an AC-to-DC converter when connected to an alternating-current power source, such as a commercial power source.

Alternatively, the electric power applicator 50 may be, for example, a power type power source in which the voltage applied between the anode AN and the cathode CA and the current flowing between the anode AN and the cathode CA are controlled such that the electric power is fed to the electrochemical cells 10 at a predetermined value.

In the example illustrated in Fig. 1A, a low-potential terminal of the electric power applicator 50 is connected to the power feed plate 11, and a high-potential terminal of the electric power applicator 50 is connected to the power feed plate 12. The power feed plate 11 is in electrical contact with the cathode separator 27 located at one end in the above-described stacking direction, and the power feed plate 12 is in electrical contact with the anode separator 26 located at the other end in the above-described stacking direction.

As described above, the electrochemical hydrogen pump 100 is a device that applies electric power by using the electric power applicator 50 to move hydrogen included in the hydrogen-containing gas fed to the anode AN to the cathode CA through the electrolyte membrane 21 and produces compressed hydrogen at the cathode CA.

Although not illustrated in the drawings, a hydrogen feed system that includes the above-described electrochemical hydrogen pump 100 can be constructed. In such a case, the hydrogen feed system can be provided with devices required for hydrogen feed operation as needed.

For example, the hydrogen feed system may include a dew point regulator (e.g., a humidifier) that controls the dew point of a mixed gas of the high-humidity hydrogen-containing gas discharged from the anode AN and the low-humidity hydrogen-containing gas fed from an external hydrogen feed source. Examples of the external hydrogen feed source include a water electrolyzer, a reformer, and a hydrogen tank.

The hydrogen feed system may also include, for example, a temperature measuring device that measures the temperature of the electrochemical hydrogen pump 100, a hydrogen storage that temporarily stores the hydrogen discharged from the cathode CA of the electrochemical hydrogen pump 100, and a pressure measuring device that measures the pressure of the hydrogen gas stored in the hydrogen storage.

The above-described configuration of the electrochemical hydrogen pump 100 and the above-described devices included in the hydrogen feed system, which are not illustrated in the drawings, are examples and should not be limited to the examples. For example, a dead-end structure not having the anode gas outlet manifold 31 may be employed in which all the hydrogen included in the hydrogen-containing gas fed to the anodes AN through the anode gas inlet manifold 30 is compressed at the cathodes CA.

<Heating Medium Inlet Side Channel Configuration>

Fig. 2A is a perspective view illustrating an example of a heating medium channel of the electrochemical hydrogen pump of this embodiment. Fig. 2B is a plan view illustrating an example of a connection portion of the heating medium channel in Fig. 2A.

In Fig. 2A, the end plate 15 in Fig. 1A is viewed obliquely from the outside. However, in Fig. 2A, for simplification of the figure, the end plate 15 and the fasteners 17 are not illustrated, and only the heating medium channel 65, the heating medium inlet manifold 66, and the heating medium feed passage 67 are illustrated. Fig. 2B is a plan view illustrating a connection portion J1 connecting the heating medium channel 65 and the heating medium inlet manifold 66 viewed from below.

As illustrated in Fig. 2A, the heating medium channel 65 includes an annular channel 65A and a transverse passage 65B extending across the annular channel 65A.

The annular channel 65A is an annular groove in the main surface of the end plate 15 and extends along the outer edge of the disc-shaped end plate 15. The annular groove has a width L1 as indicated in Fig. 2B.

The transverse passage 65B is a straight groove in the main surface of the end plate 15 and extends from the connection portion J1 to divide the inner area of the annular channel 65A into equal halves. In other words, the length of the straight groove is substantially equal to the circle diameter of the annular channel 65A in plan view. The straight groove has a width L1 as indicated in Fig. 2B.

Here, the cross-sectional area of the heating medium channel 65 is smaller than the cross-sectional area of the heating medium inlet manifold 66. In an example in Fig. 2B, the cross-sectional area SA of the annular channel 65A is expressed as "width L1 $\times$ groove depth", and the cross-sectional area S of the heating medium inlet manifold 66 is expressed as "$\pi(\varphi/2)^2$". The cross-sectional area SA is smaller than the cross-sectional area S. Furthermore, the cross-sectional area SB of the transverse passage 65B is expressed as "width L1 $\times$ groove depth", and the cross-sectional area S of the heating medium inlet manifold 66 is expressed as "$\pi(\varphi/2)^2$". The cross-sectional area SB is smaller than the cross-sectional area S.

In the above, the cross-sectional shape of the heating medium channel 65 is rectangular, but the shape should not be limited to this example. For example, the corners of the rectangle may be rounded (e.g., about R0.1 mm to about R0.3 mm). In such a case, the cross-sectional shape may be oval or circular.

As illustrated in Fig. 2A, the heating medium feed passage 67 is connected to the transverse passage 65B. Specifically, the heating medium feed passage 67 is connected to the transverse passage 65B at the connection portion J2, which is away from the connection portion J1. In other words, the connection portion J1 and the connection portion J2 are separated by a predetermined distance in the direction in which the transverse passage 65B extends. In the example illustrated in Fig. 2A, the heating medium feed passage 67 is connected to a portion of the transverse passage 65B that is closer to the connection portion J1 than the midpoint P of the transverse passage 65B.

The above-described configuration of heating medium channel 65 is an example and should not be limited to this example. For example, in the above, the heating medium channel 65 consists of a channel groove in the main surface of the end plate 15, but the heating medium channel 65 may consist of a hole inside the end plate 15. For example, two metal sheets each having a recess corresponding to the hole may be integrally joined to form the hole.

<Heating Medium Outlet Side Channel Configuration>

The heating medium channel 64, the heating medium discharge passage 69, and the heating medium outlet manifold can be configured when the components in Fig. 2A are turned by 180° and the gas flow direction is reversed. Thus, the details of this configuration will not be described because the details are readily understood from the above description of the heating medium channel 65, the heating medium feed passage 67, and the heating medium inlet manifold 66.

[Operation]

Hereinafter, an example of the hydrogen compression operation of the electrochemical hydrogen pump 100 is described with reference to the attached drawings.

For example, an arithmetic circuit of a controller, which is not illustrated, may read a control program from a memory circuit of the controller to perform the operation described below. However, the operation described below is not necessarily performed by a controller. The operator may perform a part of the operation. In the following example, a controller is used to control the operation.

First, a low-pressure hydrogen-containing gas flowing through the anode gas inlet pathway 32 is fed to the anode AN of the electrochemical hydrogen pump 100 through the anode gas feed channel 41, the anode gas inlet manifold 30, and the first communication passage 32A, and electric power is fed by the electric power applicator 50 to the electrochemical hydrogen pump 100. The hydrogen-containing gas that has passed through the anode AN is discharged to the anode gas outlet pathway 33 through the second communication passage 32B, the anode gas outlet manifold 31, and the anode gas discharge channel 42.

Furthermore, during feeding of the hydrogen-containing gas to the anode AN of the electrochemical hydrogen pump 100, the controller controls the heater 62 to heat the heating medium and also controls the pump 61. Specifically, the heating medium having a temperature controlled to a suitable temperature by the heater 62 passes through the heating medium channel 65, the heating medium branch channel 60, and the heating medium channel 64 when the pump 61 is activated, resulting in circulation of the heating medium through the heating medium circulation pathway 63.

In this way, hydrogen molecules are separated into protons and electrons in the anode catalyst layer 24 of the anode AN as a result of an oxidation reaction (Formula (1)). The protons move to the cathode catalyst layer 23 through the electrolyte membrane 21. The electrons move to the cathode catalyst layer 23 through the electric power applicator 50.

Then, in the cathode catalyst layer 23, hydrogen molecules are reproduced in a reduction reaction (Formula (2)). It is known that, when the protons travel through the electrolyte membrane 21, a specific amount of water also moves with the protons from the anode AN to the cathode CA as electro-osmotic water.

At this time, the hydrogen ($H_2$) produced at the cathode CA can be compressed by an increase in the pressure drop in the cathode gas outlet pathway caused using a flow rate regulator, which is not illustrated. Examples of the flow rate regulator include a back pressure valve and a control valve disposed in the cathode gas outlet pathway.

$$\text{Anode: } H_2 \text{ (low pressure)} \rightarrow 2H^+ + 2e^- \qquad (1)$$

$$\text{Cathode: } 2H^+ + 2e^- \rightarrow H_2 \text{ (high pressure)} \qquad (2)$$

In this way, in the electrochemical hydrogen pump 100, hydrogen included in a hydrogen-containing gas fed to the anode AN is moved to the cathode CA when electric power is applied by the electric power applicator 50, and the compressed high-pressure hydrogen is produced at the cathode CA. The hydrogen compression operation of the electrochemical hydrogen pump 100 is performed in this way, and the hydrogen compressed at the cathode CA passes through the communication pathway, the cathode gas outlet manifold, and the cathode gas discharge channel 40 and then is fed to, for example, a hydrogen demander through the cathode gas outlet pathway. Examples of the hydrogen demander include a pipe for a hydrogen infrastructure, a hydrogen storage, and a fuel cell. In other words, the hydrogen compressed at the cathode CA may be temporarily stored in a hydrogen storage, which is an example of the hydrogen demander. Furthermore, the hydrogen stored in the hydrogen storage may be timely fed to a fuel cell, which is an example of the hydrogen demander.

As described above, the electrochemical hydrogen pump 100 of this embodiment allows less unbalanced distribution of the heating medium flowing in the compressor than a conventional device. Specifically, the electrochemical hydrogen pump 100 of this embodiment allows less unbalanced distribution of the heating medium between the heating medium feed passage 67 in the end plate 15 and the heating medium inlet manifold 66 than a conventional device.

Here, the heating medium needs to flow through the heating medium inlet manifold 66 in an amount enough to be distributed to each of the electrochemical cells 10 in a predetermined amount. Thus, it is more advantageous for the heating medium inlet manifold 66 to have a larger cross-sectional area in order to reduce pressure drop that occurs during passage of the heating medium through the heating medium inlet manifold 66.

Thus, in the electrochemical hydrogen pump 100 of this embodiment, the heating medium feed passage 67 is connected to the transverse passage 65B of the heating medium channel 65, so that the heating medium that has passed through the heating medium feed passage 67 can readily flow to the annular channel 65A of the heating medium channel 65 through the transverse passage 65B as indicated by arrows in Fig. 2A. With this configuration, the electrochemical hydrogen pump 100 of this embodiment allows appropriate flow of the heating medium with less unbalanced distribution of the heating medium between the heating medium feed passage 67 in the end plate 15 and the heating medium inlet manifold 66 than a conventional device.

In such a case, in the electrochemical hydrogen pump 100 of this embodiment, the heating medium may appropriately flow such that the heat of the heating medium controlled at an appropriate temperature by the heater 62 keeps the entire end plate 15 warm. However, such a temperature control of the heating medium is an example and should not be limited to this example. For example, the temperature control of the heating medium may be performed by a cooler which cools the entire end plate 15 to an appropriate temperature, instead of the heater 62.

If the heating medium feed passage 67 is connected to the connection portion J1, the heating medium that has passed through the heating medium feed passage 67 will readily flow into the heating medium inlet manifold 66 without passing through the heating medium channel 65 in the end plate 15.

In view of this, in the electrochemical hydrogen pump 100 of this embodiment, the transverse passage 65B and the heating medium feed passage 67 are connected to each other at the connection portion J2 that is away from the connection portion J1. In this configuration, the heating medium that has passed through the heating medium feed passage 67 can flow through the heating medium channel 65 in the end plate 15 more easily than a configuration in which the transverse passage 65B and the heating medium feed passage 67 are connected to each other at the connection portion J1.

Furthermore, if the heating medium feed passage 67 is connected to a portion of the transverse passage 65B that is farther from the connection portion J1 than the midpoint P of the transverse passage 65B is, the pressure drop during passage of the heating medium through the heating medium channel 65 may increase.

In view of this, in the electrochemical hydrogen pump 100 of this embodiment, the connection portion between the transverse passage 65B and the heating medium feed passage 67 is closer to the connection portion J1 than the midpoint P of the transverse passage 65B is. This causes less pressure drop during passage of the heating medium through the heating medium channel 65 than a configuration in which the connection portion between the transverse passage 65B and the heating medium feed passage 67 is farther from the connection portion J1.

EXAMPLE

The electrochemical hydrogen pump 100 in Example has the same configuration as the electrochemical hydrogen pump 100 in the embodiment, except for the configuration of the heating medium channel 65 described below.

Fig. 3A is a perspective view illustrating an example of the heating medium channel of the electrochemical hydrogen pump in Example of the embodiment. Fig. 3B is a plan view illustrating an example of the connection portion of the heating medium channel in Fig. 3A.

Fig. 3A illustrates the end plate 15 in Fig. 1A viewed obliquely from the outside. However, in Fig. 3A, for simplification of the figure, the components such as the end plate 15 and the fasteners 17 are not illustrated, and only the heating medium channel 65, the heating medium inlet manifold 66, and the heating medium feed passage 67 are illustrated. Fig. 3B is a plan view illustrating a connection portion J1 connecting the heating medium channel 65 and the heating medium inlet manifold 66 viewed from below.

As illustrated in Figs. 3A and 3B, a portion 65BB of the transverse passage 65B that is farther from the connection portion J1 between the transverse passage 65B and the heating medium inlet manifold 66 than the connection portion J2 between the transverse passage 65B and the heating medium feed passage 67 has a larger cross-sectional area than a portion 65BA of the transverse passage 65B that is closer to the connection portion J1 than the connection portion J2. In the example illustrated in Fig. 3B, the cross-sectional area SBB of the former is expressed as "width L2 × groove depth" and the cross-sectional area SBA of the latter is expressed as "width L1 × groove depth". Since the width L2 is larger than the width L1, the cross-sectional area SBB is larger than the cross-sectional area SBA.

As described above, in the electrochemical hydrogen pump 100 of Example, the portion 65BB of the transverse passage 65B, which is farther from the connection portion J1 than the connection portion J2, has a larger cross-sectional area than the portion 65BA of the transverse passage 65B, which is closer to the connection portion J1 than the connection portion J2. This configuration can reduce the increase in pressure drop during passage of the heating medium through the heating medium channel 65 and allow the heating medium to pass through the heating medium channel 65 more easily than a configuration in which the cross-sectional areas are reversed between them.

The electrochemical hydrogen pump 100 of Example has the same configuration as the electrochemical hydrogen pump 100 of the embodiment, except for the above-described features.

The embodiment and Example of the embodiment may be combined with each other unless they contradict with each other.

Furthermore, from the foregoing description, various modifications and other embodiments of the present disclosure are obvious to one skilled in the art. Therefore, the foregoing description should be interpreted only as an example and is provided in order to teach the best modes for carrying out the present disclosure to those skilled in the art. The details of the structure and/or the function of the present disclosure can be substantially changed without departing from the spirit of the present disclosure.

Industrial Applicability

One aspect of the present disclosure is applicable to a compressor that allows less unbalanced distribution of the heating medium flowing in the compressor than a conventional compressor.

Reference Signs List

10 electrochemical cell
11 power feed plate
12 power feed plate
13 insulating plate
14 insulating plate
15 end plate
16 end plate
17 fastener
21 electrolyte membrane
22 cathode power feeder
23 cathode catalyst layer
24 anode catalyst layer
25 anode power feeder
26 anode separator
27 cathode separator
28 insulator
30 anode gas inlet manifold
31 anode gas outlet manifold
32 anode gas inlet pathway
32A first communication passage
32B second communication passage
33 anode gas outlet pathway
35 anode gas channel
40 cathode gas discharge channel
41 anode gas feed channel
42 anode gas discharge channel
45 O-ring
50 electric power applicator
60 heating medium branch channel
61 pump
62 heater
63 heating medium circulation pathway
64 heating medium channel
65 heating medium channel
65A annular channel
65B transverse passage
65BA portion of transverse passage
65BB portion of transverse passage
66 heating medium inlet manifold
67 heating medium feed passage
69 heating medium discharge passage
100 electrochemical hydrogen pump
AN anode
CA cathode
J1 connection portion
J2 connection portion

**Claims**

1. A compressor comprising:

   a stack in which multiple electrochemical cells each including an anode, a cathode, and an electrolyte membrane sandwiched therebetween are stacked;
   an end plate located at an end in a stacking direction of the stack; and
   a voltage applicator that applies a voltage between the anode and the cathode, wherein
   the compressor causes, by using the voltage applicator to apply the voltage, hydrogen in a hydrogen-containing gas fed to the anode to move to the cathode and produces compressed hydrogen,
   the end plate has a first channel through which a heating medium flows,
   the stack has a second channel extending through the stack and connected to the first channel,
   the first channel has a smaller cross-sectional area than the second channel,
   the first channel includes an annular channel and a transverse passage extending across the annular channel, and
   a heating medium external channel that is disposed outside the stack and through which the heating medium flows is connected to the transverse passage.

2. The compressor according to claim 1, wherein the heating medium external channel is connected to a portion of the transverse passage that is away from a connection portion between the transverse passage and the second channel.

3. The compressor according to claim 2, wherein the heating medium external channel is connected to a portion of the transverse passage that is closer to the connection portion between the transverse passage and the second channel than a midpoint of the transverse passage.

4. The compressor according to claim 2 or 3, wherein a portion of the transverse passage that is farther from the connection portion between the transverse passage and the second channel than a connection portion between the transverse passage and the heating medium external channel has a larger cross-sectional area than a portion of the transverse passage that is closer to the connection portion between the transverse passage and the second channel than the connection portion between the transverse passage and the heating medium external channel.

FIG. 1A <u>100</u>

FIG. 1B

# FIG. 2A

# FIG. 2B

# FIG. 3A

# FIG. 3B

## INTERNATIONAL SEARCH REPORT

International application No.

**PCT/JP2022/043660**

| A. | CLASSIFICATION OF SUBJECT MATTER |
| --- | --- |

*C25B 1/02*(2006.01)i; *C25B 9/00*(2021.01)i; *C25B 9/05*(2021.01)i; *C25B 9/23*(2021.01)i; *C25B 9/67*(2021.01)i
FI:  C25B1/02; C25B9/00 Z; C25B9/23; C25B9/67; C25B9/05

According to International Patent Classification (IPC) or to both national classification and IPC

| B. | FIELDS SEARCHED |
| --- | --- |

Minimum documentation searched (classification system followed by classification symbols)

C25B1/02; C25B9/00; C25B9/05; C25B9/23; C25B9/67

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 6956392 B1 (PANASONIC IP MAN CO LTD) 02 November 2021 (2021-11-02)<br>entire text | 1–4 |
| A | 米田 雅一, ＰＥＦＣスタックの流路構造と作動条件に対する発電性能への影響解析, 電池討論会講演要旨集　第５５回, 内本 喜晴　（公社）電気化学会　電池技術委員会, 19 November 2014<br>entire text, (YONEDA, Masakazu), non-official translation (Effect analysis on power generation performance for flow channel structure of PEFC stack and operating conditions. Lecture Abstracts of the 55th Battery Symposium in Japan. UCHIMOTO, Yoshiharu The Committee of Battery Technology of the Electrochemical Society of Japan.) | 1–4 |
| A | US 2011/0136027 A1 (IDATECH, LLC) 09 June 2011 (2011-06-09)<br>entire text | 1–4 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **18 January 2023** | **31 January 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/043660**

| Patent document cited in search report | | | Publication date (day/month/year) | Patent family member(s) | | | Publication date (day/month/year) |
|---|---|---|---|---|---|---|---|
| JP | 6956392 | B1 | 02 November 2021 | US entire text | 2021/0399319 | A1 | |
| | | | | CN | 113825859 | A | |
| US | 2011/0136027 | A1 | 09 June 2011 | EP entire text | 2329556 | A1 | |
| | | | | CN | 102132450 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6956392 B